# EUROPEAN PATENT SPECIFICATION

(11) **EP 2 275 487 B1**
(45) Date of publication and mention of the grant of the patent: **02.11.2011**
(21) Application number: 10180899.6
(22) Date of filing: 10.05.2005
(51) Int. Cl.: C08L 33/08, C08K 3/04, C09D 5/26, C09D 5/24

(54) **Composite materials based on carbon nanotubes and polymer matrices and processes for obtaining same**
Verbundmaterialien auf der Basis von Kohlenstoffnanoröhren und Polymermatrizen und deren Herstellungsverfahren
Matériaux composites basés sur des nanotubes de carbone et des matrices polymériques, et procédés de production de ces matériaux

(30) Priority: 11.05.2004 FR 0405120
(43) Date of publication of application: 19.01.2011
(62) Divisional of application: 05748178.0
(73) Proprietor: Arkema France, 92700 Colombes (FR); Centre National de la Recherche Scientifique, 75794 Paris Cedex 16 (FR)
(72) Inventor: Guerret, Olivier, 69890, LA TOUR DE SALVIGNY (FR); Guerret-Piecourt, Christelle, 64230, MAZEROLLES (FR); Billon, Laurent, 64110, SAINT-FAUST (FR); Datsyuk, Vitaliy, 12249 Berlin (DE)

(56) References cited:
- WO-A1-2005/073305
- US-A- 4 090 845
- SHOFNER M L ET AL: "Single wall nanotube and vapor grown carbon fiber reinforced polymers processed by extrusion freeform fabrication", COMPOSITES PART A: APPLIED SCIENCE AND MANUFACTURING, ELSEVIER SCIENCE PUBLISHERS B.V., AMSTERDAM, NL, vol. 34, no. 12, December 2003 (2003-12), pages 1207-1217, XP004471077, ISSN: 1359-835X

## Description

The present invention relates to the field of carbon nanotubes, particularly to the field of stable dispersions of carbon nanotubes. It relates more particularly to a process for stably dispersing carbon nanotubes in organic or aqueous solvents or in polymer matrices.

Carbon nanotubes, generally referred to as CNTs, are an allotropic variety of carbon in an sp2 configuration which consists of a long single-walled tube or double-walled tube (referred to as dwCNT) or multi-walled tube (referred to as mwCNT) of aromatic rings joined to one another.

CNTs are known for their electrically and thermally conducting properties and their mechanical properties. Those skilled in the art have been trying to use them, since their discovery, as additives to materials in order to introduce into these materials the same properties as the CNTs. Three types of difficulties are generally encountered:
- (1) dispersion of the CNTs in the host matrix,
- (2) difficulty in breaking the CNT agglomerates that organize themselves into faggots due to a strong van der Waals attraction between tubes or into a ball according to their method of production,
- (3) quality of the charge (CNT) matrix interface.

Without good dispersion of the CNTs in the material, the percolation threshold, i.e. the level of charge starting from which a discontinuity of a property of the material, such as its conductivity or its rigidity, is observed, can only be attained for large amounts of CNT that harm other properties of the material, for instance its transparency or its fluidity. Good dispersion is also necessary to obtain materials having controlled homogeneity. Finally, something that also depends on the quality of the matrix CNT interface is the advantage of adding CNTs in particular for use as mechanical reinforcement or as an aid to conduction.

It appears, according to the above, that the technical problems to be solved are, first and foremost, the control and optimization of the dispersion of the CNTs and the control of the CNT/matrix interface.

Matyjaszewski et al., Langmuir (2003), 19(16), 6342-6345 describe the manner in which polymers such as poly(butyl acrylate) can be grafted at the surface of carbon blacks. The method consists in modifying the surface of the carbon black by anchoring a brominated molecule that then acts as an initiation site for a radical polymerization controlled by a copper complex. The carbon black is thus coated in a layer of acrylate that is dispersible in a matrix in which the polyacrylate is compatible. It is evident that such a method can be applied using polymers other than poly(butyl acrylate) provided that a copper complex makes it possible to control the polymerization of the monomer. This same method can also be applied to CNTs instead of carbon black. Thus, Shuhui Qin (J. Am. Chem. Soc., 1, 2004, pp. 170-176) and Z. Yao et al. J. Am. Chem. Soc., 1, 2004 pp. 1-8) had developed methods for grafting n-butyl acrylate chains at CNT ends.

These methods require, however, prior chemical modification of the surface of the carbon nanotube, which presents drawbacks both from the point of view of production (expensive chemical modification steps) and from the point of view of application of the CNTs, since, in modifying the surface of the nanotube, the properties thereof are modified, as illustrated, inter alia, by A. Garg et al. in "Effect of chemical functionalization on the mechanical properties of carbon nanotubes", Chemical physics letters, vol. 295 pp. 273-278, 1998.

In seeking to solve the technical problems described above, the applicant has discovered a simple method for stably dispersing CNTs in polymer matrices and for obtaining stable dispersions and materials having good properties. The subject of the present invention therefore consists of these stable dispersions and the method for producing them.

Specifically, the applicant has discovered that the use, as a CNT/polymer matrix compatibilizer, of a grafted or block copolymer having at least one block comprising ionic or ionizable functions such as acids, anhydrides or aminos, and at least one block that is compatible with the polymer matrix, makes it possible to obtain CNT/polymer matrix material that is homogeneous and stable and has the intended properties for use.

The first subject of the invention is therefore a composite material comprising, by weight:
- from 0.01 to 99% of CNT,
- from 99.99 to 0% of at least one polymer P1, and
- of at least one block copolymer having at least one block 1 bearing ionic or ionizable functions, derived from the polymerization of at least one monomer M1 bearing these ionic or ionizable functions representing at least 10% by weight of the total weight of block 1, and, optionally, a block 2 that is compatible with P1 if block 1 is not.

According to a preferred embodiment of the invention the composite material comprises, by weight:
- from 0.01 to 99% of CNT,
- from 99.99 to 1% of at least one polymer P1, and
- of at least one block copolymer having at least one block 1 bearing ionic or ionizable functions, derived from the polymerization of at least one monomer M1 bearing these ionic or ionizable functions representing at least 10% by weight of the total weight of block 1, and, optionally, a block 2 that is compatible with P1 if block 1 is not.

The copolymer is present in the material according to a CNT/copolymer ratio by mass (alpha = m(CNT)/m(copolymer)) of between 0.001 and 1000.

According to the invention, the CNTs are single-walled, double-walled or multi-walled carbon nanotubes. They preferably represent between 0.01% and 20% by mass, and even more preferably between 0.03% and 10% by mass, of the total mass of the composite material.

According to the invention, the polymer P1 may be an elastomer, a thermoplastic or a thermoset. According to a preferred form of the invention, it represents from 10 to 99%, and even more preferably from 50 to 99% by weight, of the total weight of the composite material. It is chosen from poly(alkyl acrylate), polystyrene, polyvinyl chloride (PVC), chlorinated polyvinyl chloride (PVCC), polyvinylidene fluoride (PVDF), poly-(methyl methacrylate) (PMMA), polycarbonates, polyamides, unsaturated polyesters, polylactones, polyepoxides, polyimines, polyphosphazenes, polyolefins, polybutadienes, poly(vinyl acetate), polyvinyl alcohol, polyketones, polyurethanes, and the corresponding copolymers.

According to the invention, the block copolymer is present in an alpha ratio of preferably between 0.01 and 100, and even more preferably between 0.01 and 10.

Block 1 is obtained by the polymerization of a mixture of monomers (B1) comprising at least one monomer M1 bearing an ionic or ionizable, acid, anhydride or amino function representing at least 10% by weight of the total weight of the mixture B1. The rest of the mixture consists of at least one monomer M2 that is copolymerizable with M1. Preferably, M1 represents at least 50% by weight of the total weight of B1.

M1 is preferably chosen from the group comprising monomers bearing an acid function and/or an anhydride function, such as acrylic acid, methacrylic acid or maleic anhydride.

M2 is chosen from vinylaromatic derivatives such as styrene, alpha-methylstyrene, acrylates and methacrylates, their amide homologues such as acrylamide or methacrylamide and acrylonitrile.

Block 2 can be obtained by the polymerization of a mixture of monomers B2 comprising at least one monomer chosen from monomers having a carbon-carbon double bond that are capable of radical polymerization, such as vinyl monomers, vinylidene monomers, diene monomers and olefin monomers.

Those skilled in the art know how to define the content and the composition of the mixture B2 so as to have a block 2 that is of the same nature as or is compatible with the polymer P1. For example, if P1 is poly(methyl methacrylate), PVC or PVDF, a block 2 based on methyl methacrylate will be chosen. On the other hand, if P1 is polystyrene, block 2 will also be styrene-based.

The composite material of the invention can be prepared by various pathways. It can be prepared, for example, by conventional pathways known to those skilled in the art such as blending or polymerization methods. Although these pathways may give satisfaction, the applicant has developed a process that is more effective than the usual blending pathways. Specifically, the applicant has also discovered, and this is a preferred form of the invention, that the compatibilizer is even more effective when the block comprising the acid and/or anhydride units is prepared in the presence of the CNTs to be introduced into the matrix.

Another subject of the invention is therefore a process for dispersing the CNTs in polymer matrices, according to the steps described below:
Step 1: suspension of the CNTs in the polymerization medium comprising the mixture B1 and an initiating system comprising an alkoxyamine and, optionally, an agent for controlling the polymerization, the alkoxyamine representing from 0.1 to 10 mol% relative to B1, and, optionally, a solvent S1,
Step 2: polymerization of the dispersion obtained in 1 at a temperature of between 40 and 140°C until a degree of conversion of between 10 and 100% is obtained,
Step 3: addition of the mixture B2 to the suspension obtained in 2 and polymerization at a temperature of between 40 and 140°C until the desired degree of conversion is obtained,
Step 4: recovery and drying of the product obtained in 3,
Step 5: blending of the product obtained in 4 with the polymer matrix.

It may sometimes be useful to eliminate the monomers B1 that have not reacted in step 2 before continuing the process. In this situation, the product prepared in 2 is recovered by drying. It is then redispersed in the mixture B2 in the optional presence of a solvent S2 and of an agent for controlling the polymerization. The process is then continued as described in steps 3 to 5.

As regards step 2, the polymerization of said monomer is initiated using an initiator (alkoxyamine) of general formula: 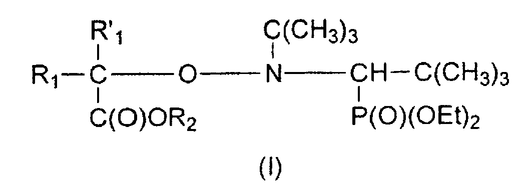 in which
R1 and R'1, which may be identical or different, represent a linear or branched alkyl radical having a number of carbon atoms ranging from 1 to 3,
R2 represents an alkali metal such as Li, Na or K, an ammonium ion such as NH₄⁺, NBu₄⁺ or NHBu₃⁺, a hydrogen atom, or an alkyl radical optionally bearing an alkoxy or amino function.

The polymerization is carried out at a temperature of between 40 and 140°C under a pressure of between 1 and 20 bar. This polymerization is carried out until a conversion M1 of between 10 and 100% is attained. We then obtain a dispersion of CNT in the presence of polymers or of oligomers that have the particularity of bearing, at the end of the chains, a function of formula: 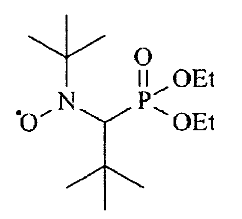 which makes them capable of re-initiating a radical polymerization. The dispersion obtained in this step can be recovered by drying or be used as it is so as to go onto the following step.

As regards step 3, the monomers B2 are chosen such that the polymer resulting from the polymerization of B2 is compatible with the matrix P1. Polymerization is therefore carried out under conditions suitable for the monomers introduced. In this step, conventional polymerization initiators such as peroxide derivatives, redox derivatives or azo derivatives can in addition be used, in order to convert all the vinyl monomers. It may, however, be preferred to stop the polymerization before complete conversion of the monomers, and in this case, the material will be recovered by drying under vacuum.

In step 5, the material is dispersed in a polymer matrix either by blending in a solvent or by means of a molten blend such that the intended level of conductivity (electrical or thermal) and/or the intended mechanical properties are obtained for the final composite material. Another manner consists in dispersing the material previously obtained in a monomer solution intended to polycondense as in the case of thermosetting systems.

The novelty of this dispersing process lies in the fact that the first monomer M1 that is polymerized, and that makes it possible to anchor the polymer chains at the surface of the nanotubes, must be ionic or ionizable, in particular the acid groups, even in an organic medium: it appears that these oligomers exhibit considerable interaction with the surface of the nanotubes, which interaction is sufficient to then attach to the surface of the nanotubes the blocks that are compatibilizers for the desired matrix. This affinity remains when the blending with the polymer matrix takes place, and there is no phenomenon of desorption which would make the CNTs free and take us away from the percolation threshold due to aggregation of the latter with one another in the form of faggots, or due to poor dispersion.

All the products, dry or in dispersion, obtained from the second step are also new products that can be used directly in polymerization processes or as additives in dispersed media such as latices. The master material obtained at the end of the fourth step can be used as it is for its conducting properties (heat or electrically conducting properties) or mechanical properties without necessarily diluting it in a polymer matrix.

Steps 1 to 5 are preferably defined according to whether:
As a result of S1 and S2, they may be identical or different, and preference will be given, as solvent, to: water, a cyclic or linear ether, an alcohol, a ketone, an aliphatic ester, acetic acid, propionic acid, butyric acid, an aromatic solvent such as benzene, toluene, xylenes, ethyl benzene, a halogenated solvent such as dichloromethane, chloroform or dichloroethane, an alkane such as pentane, n-hexane, cyclohexane, heptane, octane, nonane or dodecane, an amide such as dimethylformamide (DMF), dimethyl sulphoxide, or any mixture of the above solvents.

The monomer M1 is preferably in a proportion of at least 50% relative to all the monomers present in step 1, and even more preferably of at least 90%.

The amount of CNT dispersed by sonication or mechanical stirring in the solvent is between 0.01% by weight and 50% by weight, preferably between 0.01% and 20%.

The molar ratio between the acid monomer and the compound (I) introduced into the solvent is between 20 and 10 000, preferably between 50 and 1000. The concentration of acid monomer in the solvent is at most equal to 3 mol.1⁻¹.

The preferred compound I is such that R1 and R'1 are methyl groups and R2 is a hydrogen atom.

The conversion of the acid monomer in the second step is preferably between 30 and 80%, and more preferably between 50 and 80%.

The monomers of the fourth step can be chosen from monomers having a carbon-carbon double bond capable of radical polymerization, such as vinyl monomers, vinylidene monomers, diene monomers, olefin monomers, allyl monomers, etc.

The monomers considered can in particular be chosen from vinylaromatic monomers such as styrene or substituted styrenes, in particular α-methylstyrene and sodium styrene sulphonate, dienes such as butadiene or isoprene, acrylic monomers such as acrylic acid or its salts, alkyl acrylates, cycloalkyl acrylates or aryl acrylates such as methyl, ethyl, butyl, ethylhexyl or phenyl acrylate, hydroxyalkyl acrylates such as 2-hydroxyethyl acrylate, ether alkyl acrylates such as 2-methoxyethyl acrylate, alkoxy- or aryloxypolyalkylene glycol acrylates such as methoxypolyethylene glycol acrylates, ethoxypolyethylene glycol acrylates, methoxypolypropylene glycol acrylates, methoxypolyethylene glycol-polypropylene glycol acrylates or mixtures thereof, aminoalkyl acrylates such as 2-(dimethylamino)ethyl acrylate (ADAME), acrylates of amine salts, such as [2-(acryloyloxy)ethyl]trimethylammonium chloride or sulphate or [2-(acryloyloxy)-ethyl]dimethylbenzylammonium chloride or sulphate, fluoroacrylates, silylated acrylates or phosphorus-comprising acrylates, such as alkylene glycol acrylate phosphates, methacrylic monomers such as methacrylic acid or its salts, alkyl, cycloalkyl, alkenyl or aryl methacrylates such as methyl, lauryl, cyclohexyl, allyl or phenyl methacrylate, hydroxyalkyl methacrylates such as 2-hydroxyethyl methacrylate or 2-hydroxypropyl methacrylate, ether alkyl methacrylates such as 2-ethoxyethyl methacrylate, alkoxy- or aryloxypolyalkylene glycol methacrylates such as methoxypolyethylene glycol methacrylates, ethoxypolyethylene glycol methacrylates, methoxypolypropylene glycol methacrylates, methoxypolyethylene glycol-polypropylene glycol methacrylates or mixtures thereof, aminoalkyl methacrylates such as 2-(dimethylamino)ethyl methacrylate (MADAME), methacrylates of amino salts, such as [2-(methacryloyloxy)ethyl]trimethylammonium chloride or sulphate or [2-(methacryloyloxy)ethyl]-dimethylbenzylammonium chloride or sulphate, fluoro-methacrylates such as 2,2,2-trifluoroethyl methacrylate, silylated methacrylates such as 3-methacryloylpropyltrimethylsilane, phosphorus-comprising methacrylates such as alkylene glycol methacrylate phosphates, hydroxyethylimidazolidone methacrylate, hydroxyethylimidazolidinone methacrylate or 2-(2-oxo-1-imidazolidinyl)ethyl methacrylate, acrylonitrile, acrylamide or substituted acrylamides, 4-acryloylmorpholine, N-methylolacrylamide, acrylamido-propyltrimethylammonium chloride (APTAC), acrylamido-methylpropanesulphonic acid (AMPS) or its salts, methacrylamide or substituted methacrylamides, N-methylolmethacrylamide, methacrylamidopropyltrimethyl-ammonium chloride (MAPTAC), itaconic acid, maleic acid or its salts, maleic anhydride, alkyl or alkoxy- or aryloxypolyalkylene glycol maleates or hemimaleates, vinylpyridine, vinylpyrrolidinone, (alkoxy)poly-(alkylene glycol) vinyl ether or divinyl ether, such as methoxypoly(ethylene glycol) vinyl ether or poly(ethylene glycol) divinyl ether, alone or as a mixture of at least two monomers mentioned above.

As olefin monomers, mention may be made of ethylene, butene, hexene and 1-octene and also fluorinated or chlorinated olefin monomers.

As vinylidene monomer, mention may be made of vinylidene fluoride or chloride.

As diene monomer, mention may be made of butadiene, isoprene and cyclopentadiene,

The polymers P1 in which the CNTs are dispersed may be: poly(alkyl acrylate), polystyrene, polyvinyl chloride (PVC), chlorinated polyvinyl chloride (PVCC), polyvinylidene fluoride (PVDF), poly(methyl methacrylate) (PMMA), polyamides, unsaturated polyesters, polylactones, polyepoxides, polyimines, polyphosphazenes, polyolefins, polybutadienes, poly(vinyl acetate), polyvinyl alcohol, polyketones, polyurethanes, or any copolymer of the polymers mentioned.
The following examples illustrate the invention without limiting the scope thereof.

### Examples

The CNTs used are either:
- single-walled nanotubes or double-walled nanotubes (dwCNT). The dwCNTs were obtained by catalytic chemical vapour deposition according to the process described in "E. Flahaut, R.R. Bacsa, A. Peigney C. Laurent, Gramscale CCVD synthesis of double-walled carbon nanotubes, Chem. Com. (2003) 1442." A statistical study by transmission electromicroscopy showed that approximately 80% of the tubes are double-walled, with a diameter ranging between 1 and 3 nm and a length that can reach 100µm. Their electrical conductivity when they are pressed into the form of pellets is greater than 25 S/cm.
- multi-walled nanotubes (referred to as mwCNTs in the remainder of the text). The mwCNTs were obtained by vapour deposition in the presence of a supported catalyst according to Patent WO 03/002456A2. A statistical study by transmission electromicroscopy showed that close to 100% of the tubes are multi-walled, with a diameter ranging between 10 and 50 nm and a length that can attain 70 µm. Their electrical conductivity when they are pressed in the form of pellets is greater than 20 S/cm.

The dwCNTs and mwCNTs were purified beforehand by washing with acid solutions (sulphuric acid and hydrochloric acid) so as to rid them of residual inorganic and metal impurities.

### Example 1: Dispersing dwCNTs and mwCNTs in dioxane

0.2 g of pure dwCNTs or mwCNTs are dispersed in 15 g of 1,4-dioxane, the solution being placed in an ultrasound bath (of the type Fischer Bioblock Scientific, power 350 W, frequency 40 KHz, ultrasonication time 1 h).

### Example 2: Polymerization of acrylic acid using the dispersion obtained in Example 1:

A variable amount (see Table x2) of acrylic acid (AA) is added to the solution of Example 1 and mechanical stirring is maintained (500 rpm) for 1 h in order to promote adsorption onto the surface of the nanotubes. Once the sonication is complete, an amount of compound (I) is added, corresponding to an [AA]/[I] ratio = 300. The size of the polymers grafted onto the dwCNTs is adjusted by means of the conversion of the acrylic acid.

The suspension thus obtained is degassed and then purged with nitrogen and the temperature of the reaction medium is then brought to 115°C. The dispersions 2a-f are then obtained (Table x2). The polymerization time determines the conversion attained and, at the desired conversion, the polymerization is stopped by abruptly decreasing the temperature of the reaction medium to 30°C.

**Table x2**

| | Type of CNT | AA (g) | Polymerization time, min | CNT/pAA ratio by mass (%) | Conversion (%) | Theoretical Mn (g/mol) |
|---|---|---|---|---|---|---|
| 2a | dwCNT | 2 | 20 | 42 | 13 | 3200 |
| 2b | dwCNT | 2 | 40 | 32 | 21 | 4800 |
| 2c | dwCNT | 2 | 60 | 24 | 32 | 7200 |
| 2d | dwCNT | 1.6 | 60 | 26 | 31 | 6900 |
| 2e | mwCNT | 2 | 40 | 31 | 22 | 5100 |
| 2f | mwCNT | 2 | 60 | 22 | 33 | 7500 |

### Example 3 (comparative): Polymerization of styrene using the dispersion obtained in Example 1:

A protocol similar to Example 2 is followed, the acrylic acid being replaced with styrene. The dispersions 3a-c are thus obtained.

| | Type of CNT | Styrene (g) | Polymerization time, min | CNT/Sty ratio by mass (%) | Conversion (%) | Theoretical Mn (g/mol) |
|---|---|---|---|---|---|---|
| 3a | dwCNT | 20 | 20 | 36.4 | 17.5 | 5460 |
| 3b | mwCNT | 20 | 20 | 36.4 | 17.5 | 5460 |
| 3c | dwCNT | 14 | 60 | 16.8 | 49.6 | 15500 |

### Example 4

The dispersions produced in Examples 2 and 3 are repeated and a variable amount of a monomer B2 is added thereto (see Table x4). The temperature of the new dispersion obtained is then raised to 115°C and the polymerization is continued until the desired conversion is obtained, so as to produce the intended composition.

**Table x4**

| | Starting dispersion | Amount of B2 (g) | Polymerization time, min | CNT/polymer ratio (%) |
|---|---|---|---|---|
| 4a | 2f | MA 21.5 | 60 | 3.5 |
| 4b | 2f | MA 21.5 | 120 | 2.6 |
| 4c | 2f | MA 21.5 | 180 | 1.9 |
| 4d | 2f | MA 21.5 | 240 | 1.5 |
| 4e | 2f | MA 21.5 | 300 | 1.1 |
| 4f | 2a | MA 21.5 | 105 | 2.2 |
| 4g | 2a | MA 21.5 | 150 | 1.7 |
| 4h | 2a | MA 21.5 | 300 | 0.9 |
| 4i | 2b | MA 21.5 | 30 | 4.7 |
| 4j | 2b | MA 21.5 | 90 | 2.6 |
| 4k | 2b | MA 21.5 | 120 | 1.9 |
| 41 | 2b | MA 21.5 | 160 | 1.5 |
| 4m | 3a | MA 21.5 | 150 | 1.7 |
| 4n | 3b | MA 21.5 | 180 | 1.2 |
| 4o | 2c | S 26 | 150 | 2.1 |
| 4p | 2c | BA 32 | 180 | 1.7 |
| 4q | 2d | tBA 32 | 180 | 1.8 |

| | | | | |
|---|---|---|---|---|
| **MA: methyl acrylate, S: styrene, BA: butyl acrylate, tBA: tert-butyl acrylate** | | | | |

### Example 5: Demonstration of the essential role of the acid block

The strength of adsorption onto CNTs of the acrylic acid polymers of Example 2a is compared with that of the polystyrenes of Counterexample 3a. To do this, 0.1 g of each sample is taken. For sample 2a, three successive washes were carried out with 50 ml of ethanol. For sample 3a, the same protocol was followed, with toluene. These solvents correctly solvate, firstly, the poly(acrylic acid) and, secondly, the polystyrene.

The CNTs thus washed are subsequently dried under vacuum at 50°C for 24 hours, and then analysed by thermogravimetric analysis (measured on a TA Instruments TGA2950 device, under the conditions: nitrogen atmosphere and temperature ramp of 10°C/min). A residual amount of poly(acrylic acid) after washing of 20.5% by weight is observed for Example 2a (i.e. a proportion of 30% by weight of the initial PAA chains that remain adsorbed after washing). For Example 3a, a residual amount of polystyrene after washing of 3.7% by weight is obtained, reflecting a loss of 96% by weight of the polystyrene during the washing.

### Example 6: Demonstration of the essential role of the acid block for anchoring a block that is subsequently compatible with a polymer matrix.

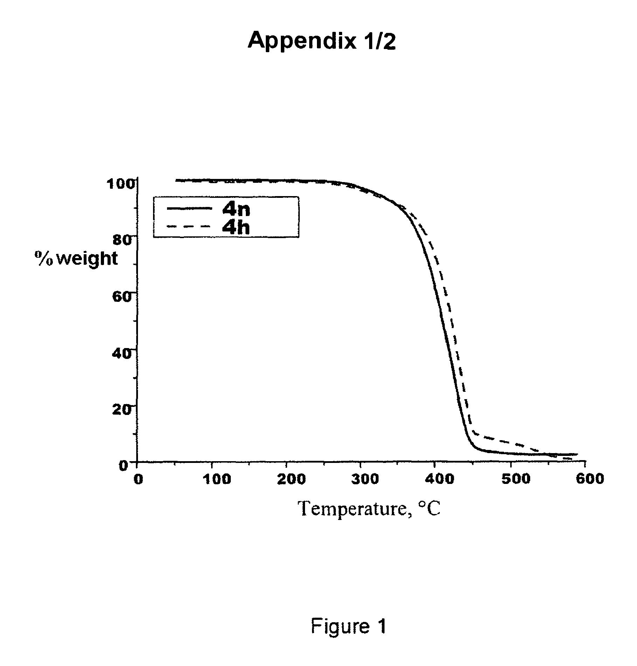

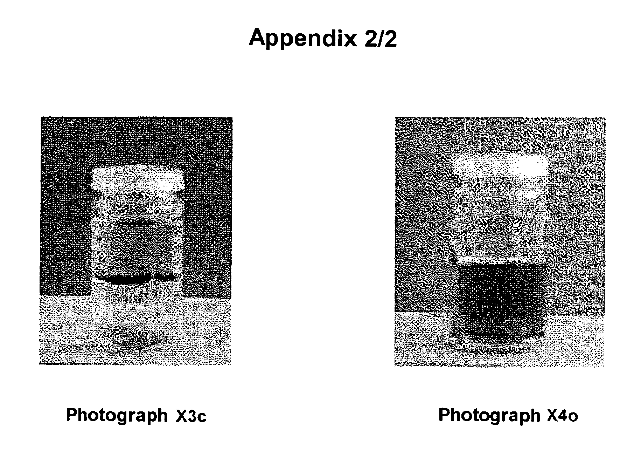

Figure 1 (appendix 1/2) gives the thermogravimetric analysis measurements obtained for the composites 4h and 4n. It is observed that, in the case of 4h, the loss of weight occurs in two stages: a loss of 90% of weight at around 450°C and then a slow decrease in weight between 450°C and 575°C. In the case of 4n, this second stage does not exist and, from 450°C, the entire copolymer was degraded. This difference shows that certain fragments of polymers in 4n are intimately linked to the surface of the nanotubes (approximately 10%), which delays their degradation. In 4h, the interactions are clearly less strong, which illustrates the importance of the first acid block present in 4h compared to the first polystyrene block present in 4n.

### Example 7: Illustration of the role of the acid block for dispersing the nanotubes in an aqueous medium

After sonication, for one hour, of 0.2 g of dwCNT in a two-phase mixture made up of 7 g of water and 7 g of toluene, it is observed that the CNTs initially dispersed in the upper phase (toluene phase) settle out and come to rest at the water/toluene interface.

After sonication of 0.5 g of compound 2c under the same conditions as above, the nanotubes remain dispersed in the water. This dispersion is stable for several months at ambient temperature.

### Example 8: Illustration of the role of the acid block for dispersing the nanotubes in an organic medium

Under the same conditions as in Example 7, an attempt was made to disperse the modified CNTs of Examples 3c (not the invention) and 4o. In the case 3c, the CNTs rapidly settle out and are located at the water/toluene interface (see photograph X3c, appendix 2/2). In the case 4o, which is a material according to the invention, a stable dispersion of the CNT is observed over several months in the toluene phase (photograph X4o, appendix 2/2, which represents the organic phase only after 2 months storage).

### Example 9: Illustration of the role of the acid block for dispersing the nanotubes in a polymer medium

4 g of commercial polystyrene (Lacqrène®1160) are added to a dispersion of composite 4o (1 g) in toluene (15 g). The mixture is maintained for several hours with stirring, and the solution is then evaporated off slowly so as to obtain a bubble-free film (24 hours at 70°C in a ventilated oven and then 24 hours under vacuum (20 mbar) at 80°C).

The film obtained is homogeneous; no CNT aggregates are observed.

### Example 10: Measurement of the conductivities of the composites of Example 4

The conductivities are measured on thin films obtained by slow evaporation of a dispersion in dioxane of the composites 4 according to a protocol similar to that of Example 9. The measurements are carried out according to the method known to those skilled in the art as the 4-point method.

| Composite | Conductivity (S/cm) | % CNT/polymer |
|---|---|---|
| 4g | 2.2 10⁻³ | 1.7 |
| 4h | 8.8 10⁻⁵ | 0.9 |
| 4i | 0.59 | 4.7 |
| 4k | 0.22 | 1.9 |
| 41 | 10⁻⁵ | 1.5 |

It is understood, in these examples, that materials 4i and 4k are above the percolation threshold. Composite 4g is in the threshold region, the others are below.

These measurements confirm that composites obtained according to the invention conserve the properties of conduction of the CNT-containing materials. This shows that the attachment of a first acid block to the surface of the CNTs does not affect these properties.

## Claims

1. Process for dispersing carbon nanotubes(CNTs) in polymer matrices **characterized in that** it comprises the following steps:
*Step 1*: suspension of the CNTs in the polymerization medium comprising the mixture of monomers B1 comprising at least one monomer M1 bearing an ionic or ionizable function representing at least 10% by weight of the total weight of the mixture B1, and an initiating system comprising an alkoxyamine and, optionally, an agent for controlling the polymerization, the alkoxyamine representing from 0.1 to 10 mol% relative to B1, and, optionally, a solvent S1,
*Step 2*: polymerization of the dispersion obtained in 1 at a temperature of between 40 and 140°C until a degree of conversion of between 10 and 100% is obtained,
*Step 3*: addition of the mixture of monomers B2 to the suspension obtained in 2 and polymerization at a temperature of between 40 and 140°C until the desired degree of conversion is obtained,
*Step 4*: recovery and drying of the product obtained in 3,
*Step 5:* blending of the product obtained in 4 with the polymer matrix P1.

2. Process according to claim 1 **characterized in that** it comprises a step of recovery and drying of the product obtained in step 2, followed by the dispersion of the powder thus obtained in the mixture of monomers B2 in the optional presence of a solvent S2 and of an agent for controlling the polymerization, the process being continued as described in steps 3 to 5.

3. Process according to Claim 1 or 2, **characterized in that** said CNT dispersed in the solvent represents from 0.01 to 90%, and preferably from 0.01 to 50%, of the dispersion.

4. Process according to any one of the preceding claims, where M1 is an acid, anhydride or amino monomer.

5. Process according to any one of the preceding claims, where M1 is acrylic acid.

6. Process according to any one of the preceding claims, **characterized in that** M1 preferably represents at least 50% by weight of the total weight of B1.

7. Process according to any one of the preceding claims **characterized in that** the rest of the mixture B1 comprises at least one monomer M2 that is copolymerizable with M1 and chosen from vinylaromatic derivatives such as styrene, acrylates and methacrylates, their amide homologues such as acrylamide or methacrylamide and acrylonitrile.

8. Process according to any one of the preceding claims, **characterized in that** the alkoxyamine corresponds to the general formula below: 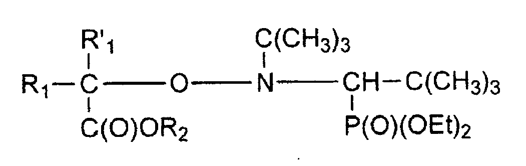 in which
R1 and R'1, which may be identical or different, represent a linear or branched alkyl radical having a number of carbon atoms ranging from 1 to 3,
R2 represents an alkali metal such as Li, Na or K, an ammonium ion such as NH₄⁺, NBu₄⁺ or NHBu₃⁺, a hydrogen atom, or an alkyl radical optionally bearing an alkoxy or amino function.

9. Process according to any one of the preceding claims, **characterized in that** the agent for controlling the polymerization corresponds to the formula below:

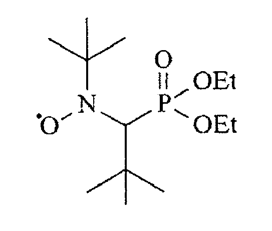

10. Process according to any one of the preceding claims **characterized in that** the M1/alkoxyamine molar ratio is between 20 and 10 000, and preferably between 50 and 100.

11. Process according to any one of the preceding claims, **characterized in that** the mixture of monomers B2 comprises at least one monomer chosen from monomers having a carbon-carbon double bond capable of radical polymerization, such as vinyl monomers, vinylidene monomers, diene monomers and olefin monomers.

12. Process according to any one of the preceding claims, **characterized in that** the solvents S1 or S2, which may be identical or different, can be chosen from water, a cyclic or linear ether, an alcohol, a ketone, an aliphatic ester, acetic acid, propionic acid, butyric acid, an aromatic solvent such as benzene, toluene, xylenes, ethyl benzene, a halogenated solvent such as dichloromethane, chloroform or dichloroethane, an alkane such as pentane, n-hexane, cyclohexane, heptane, octane, nonane or dodecane, an amide such as dimethylformamide (DMF), dimethyl sulphoxide, or any mixture of the above solvents.

13. Process according to any one of the preceding claims **characterized in that** the polymer matrix P1 is chosen from poly(alkyl acrylate), polystyrene, polyvinyl chloride (PVC), chlorinated polyvinyl chloride (PVCC), polyvinylidene fluoride (PVDF), poly(methyl methacrylate) (PMMA), polyamides, unsaturated polyesters, polylactones, polyepoxides, polyimines, polyphosphazenes, polyolefins, polybutadienes, poly(vinyl acetate), polyvinyl alcohol, polyketones, polyurethanes, or any copolymer of the polymers mentioned.

14. Composite material obtained according to the process of any one of the preceding claims **characterized in that** it comprises a block copolymer having at least one block 1 bearing ionic or ionizable functions, derived from the polymerization of at least one monomer M1 and a block 2 obtained by the polymerization of a mixture of monomers B2, which is compatible with the polymer matrix P1 if block 1 is not, this block copolymer being a compatibilizer in the CNT/polymer matrix.

15. Use of the composite according to claim 14 as a thermoregulable material, in paint formulations that are aqueous or in a solvent, in coatings, as an antistatic material or additive, or for strengthening the mechanical properties of thermosets or of thermoplastics.

## Patentansprüche

1. Verfahren zum Dispergieren von. Kohlenstoff-Nanoröhren (CNT) in Polymermatrices, **dadurch gekennzeichnet, dass** es die folgenden Schritte umfasst:
*Schritt 1*: Suspendieren der CNTs in dem Polymcrisationsmedium, das das Monomerengemisch B1, das zumindest ein eine ionische oder ionisierbare Funktion aufweisendes Monomer M1 enthält, welches mindestens 10 Gew.-% des Gesamtgewichts des Gemisches B1 ausmacht, und ein Initiatorsystem, das ein Alkoxyamin und optional einen Stoff zur Steuerung der Polymerisation enthält, wobei das Alkoxyamin, bezogen auf B1, 0,1 bis 10 Mol-% ausmacht, und optional ein Lösemittel S1 enthält,
*Schritt 2*: Polymerisieren der in 1 erhaltenen Dispersion bei einer Temperatur im Bereich von 40 bis 140 °C bis ein Umwandlungsgrad von 10 bis 100 % erreicht ist,
*Schritt 3*: Hinzufügen des Gemisches von Monomeren B2 zu der in 2 erhaltenen Dispersion und Polymerisieren bei einer Temperatur im Bereich von 40 bis 140 °C bis der gewünschte Polymerisationsgrad erreicht ist,
*Schritt 4*: Gewinnen und Trocknen des in 3 erhaltenen Produktes,
*Schritt 5*: Mischen des in 4 erhaltenen Produktes mit der Polymermatrix P1.

2. Verfahren nach Anspruch 1, **dadurch gekennzeichnet, dass** es einen Schritt umfasst, das in Schritt 2 erhaltene Produkt zu gewinnen und zu trocknen und danach das auf diese Weise erhaltene Pulver in dem Monomerengemisch B2 bei optionaler Gegenwart eines Lösemittels S2 und eines Stoffes zur Steuerung der Polymerisation zu dispergieren, wobei das Verfahren wie in den Schritten 3 bis 5 beschrieben fortgesetzt wird.

3. Verfahren nach Anspruch 1 oder 2, **dadurch gekennzeichnet, dass** die in dem Lösemittel dispergierten CNT 0,01 bis 90 % und vorzugsweise 0,01 bis 50 % der Dispersion ausmachen.

4. Verfahren nach einem der vorhergehenden Ansprüche, wobei M1 ein Säure-, Anhydrid- oder Aminomönomer ist.

5. Verfahren nach einem der vorhergehenden Ansprüche, wobei es sich bei M1 um die Acrylsäure handelt.

6. Verfahren nach einem der vorhergehenden Ansprüche, **dadurch gekennzeichnet, dass** M1 vorzugsweise zumindest 50 Gew.-% des Gesamtgewichts von B1 ausmacht.

7. Verfahren nach einem der vorhergehenden Ansprüche, **dadurch gekennzeichnet, dass** der Rest des Gemisches B1 zumindest ein Monomer M2 enthält, das mit M1 copolymerisierbar ist und das unter den vinylaromatischen Derivaten, wie Styrol, Acrylaten und Methacrylaten, deren Amid-Homologen, wie Acrylamid oder Methacrylamid, und Acrylonitril ausgewählt ist.

8. Verfahren nach einem der vorhergehenden Ansprüche, **dadurch gekennzeichnet, dass** das Alkoxyamin der folgenden allgemeinen Formel entspricht: 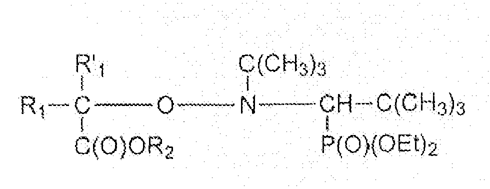 worin bedeuten:
R1 und R'1, die gleich oder verschieden sein können, eine geradkettige oder verzweigte Alkylgruppe, bei der die Anzahl der Kohlenstoffatome im Bereich von 1 bis 3 liegt,
R2 ein Alkalimetall wie Li, Na oder K, ein Ammoniumion wie NH₄⁺, NBu₄⁺ oder NHBu₃⁺, ein Wasserstoffatom oder eine Alkylgruppe, die optional eine Alkoxy- oder Aminofunktion trägt.

9. Verfahren nach einem der vorhergehenden Ansprüche, **dadurch gekennzeichnet, dass** die Verbindung zur Steuerung der Polymerisation der folgenden allgemeinen Formel entspricht:

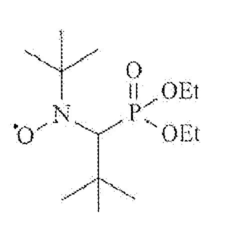

10. Verfahren nach einem der vorhergehenden Ansprüche, **dadurch gekennzeichnet, dass** das M1/Alkoxyamin-Molvcrhältnis im Bereich von 20 bis 10.000 und vorzugsweise 50 bis 100 liegt.

11. Verfahren nach einem der vorhergehenden Ansprüche, **dadurch gekennzeichnet, dass** das Monomerengemisch B2 zumindest ein Monomer enthält, das unter den Monomeren ausgewählt ist, die eine zur radikalischen Polymerisation befähigte Kohlenstoff-Kohlenstoff-Doppelbindung aufweisen, wie Vinylmonomere, Vinylidenmonomere, Dienmonomere und Olefinmonomere.

12. Verfahren nach einem der vorhergehenden Ansprüche, **dadurch gekennzeichnet, dass** die Lösemittel S1 oder 52, die gleich oder verschieden sein können, unter Wasser, einem cyclischen oder linearen Ether, einem Alkohol, einem Keton, einem aliphatischen Ester, Essigsäure, Propionsäure, Buttersäure, einem aromatisehen Lösemittel wie Benzol, Toluol, Xylolen, Ethylbenzol, einem halogenierten Lösemittel wie Dichlormethan, Chloroform oder Dichlorethan, einem Alkan wie Pentan, n-Hexan, Cyclohexan, Heptan, Octan, Nonan oder Dodecan, einem Amid wie Dimethylformamid (DMF), Dimethylsulfoxid oder beliebigen Gemischen der genannten Lösemittel ausgewählt sein können.

13. Verfahren nach einem der vorhergehenden Ansprüche, **dadurch gekennzeichnet, dass** die Polymermatrix P1 unter Poly(alkylacrylat), Polystyrol, Polyvinylchlorid (PVC), chloriertem Polyvinylchlorid (PVCC), Polyvinylidenfluorid (PVDF), Poly(methylmethacrylat) (PMMA), Polyamiden, ungesättigten Polyestern, Polylactonen, Polyepoxiden, Polyiminen, Polyphophazenen, Polyolefinen, Polybutadienen, Poly(vinylacetat), Polyvinylalkohol, Polyketonen, Polyurethanen oder beliebigen Copolymeren der genannten Polymere ausgewählt ist.

14. Verbundwerkstoff, der nach dem Verfahren nach einem der vorhergehenden Ansprüche erhalten ist, **dadurch gekennzeichnet, dass** er ein Blockcopolymer umfasst, das mindestens einen ionische oder ionisierbare Funktionen tragenden Block 1, der durch Polymerisation zumindest eines Monomers M1 gebildet ist, und einen Block 2 aufweist, der durch Polymerisation eines Monomerengemisches B2 gebildet ist und der mit der Polymermatrix P1 kompatibel ist, falls Block 1 dies nicht ist, wobei das Blockcopolyrner in der CNT/Polymermatrix ein Kompatibilisierüngsmittel darstellt.

15. Verwendung eines Verbundwerkstoffes nach Anspruch 14 als thermoregulierbares Material, in Formulierungen für Anstrichstoffe, die wässrig sind oder in einem Lösemittel vorliegen, in Beschichtungen, als antistatisches Material oder Additiv oder zur Verbesserung der mechanischen Eigenschaften von Duroplasten oder von Thermoplasten.

## Revendications

1. Procédé pour disperser des nanotubes de carbone (NTCs) dans une matrice polymère **caractérisé en ce qu'**il comprend les étapes suivantes :
*Etape 1* : mise en suspension des NTC dans le milieu de polymérisation comprenant le mélange de monomères B1 comprenant au moins un monomère M1 porteur de fonctions ioniques ou ionisables représentant au moins 10 % en poids du poids total du mélange B1, et un système d'amorçage comprenant une alcoxyamine et éventuellement un agent de contrôle de la polymérisation, l'alcoxyamine représentant de 0,1 à 10 % molaire par rapport à B1, et éventuellement un solvant S1,
*Etape 2* : polymérisation de la dispersion obtenue en 1 à une température comprise entre 40 et 140°C jusqu'à un taux de conversion compris entre 10 et 100%,
*Etape 3* : Ajout du mélange de monomères B2 à la suspension obtenue en 2 et polymérisation à une température comprise entre 40 et 140°C jusqu'au taux de conversion souhaité,
Etape *4* : récupération et séchage du produit obtenu en 3,
*Etape 5* : mélange du produit obtenu en 4 avec la matrice polymère P1.

2. Procédé selon la revendication 1 **caractérisé en ce qu'**il comprend une étape de récupération et séchage du produit obtenu en 2, suivie de la dispersion de la poudre ainsi obtenue dans le mélange de monomères B2 en présence éventuelle d'un solvant S2 et d'un agent de contrôle de la polymérisation, le procédé étant poursuivi comme décrit aux étapes 3 à 5.

3. Procédé selon la revendication 1 ou 2 **caractérisé en ce que** ledit NTC dispersé dans le solvant représente de 0,01 à 90 % et de préférence de 0,01 à 50% de la dispersion.

4. procédé selon l'une quelconque des revendications précédentes , où M1 est un monomère acide, anhydride ou amino.

5. Procédé selon l'une quelconque des revendications précédentes, ou M1 est l'acide acrylique.

6. Procédé selon l'une quelconque des revendications précédentes **caractérisé en ce que** M1 représente préférentiellement au moins 50 % en poids du poins total de B1.

7. Procédé selon l'une quelconque des revendications précédentes **caractérisé en ce que** le reste du mélange B1 comprend au moins un monomère M2 qui est copolymérisable avec M1 et choisi parmi les dérivés vinylaromatiques tels que le styrène, les acrylates et les méthacrylate, leurs homologues amides tels que l'acrylamide ou le methacrylamide et l'acrylonitrile.

8. Procédé selon l'une quelconque des revendications précédentes **caractérisé en ce que** l'alcoxyamine répond à la formule général suivante : 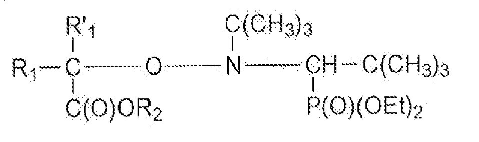 dans laquelle
R1 et R'1 identiques ou différents représentent un radical alkyle, linéaire ou ramifié, ayant un nombre d'atomes de carbone allant de 1 à 3.
R2 représente un métal alcalin tel que Li, Na, K, un ion ammonium tel que NH4+, NBu4+, NHBu3+, un atome d'hydrogène, un radical alkyl éventuellement porteur de fonction alcoxy, amino.

9. Procédé selon l'une quelconque des revendications précédentes **caractérisé en ce que** que l'agent de contrôle de la polymérisation répond à la formule suivante:

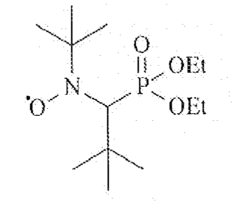

10. Procédé selon l'une quelconque des revendications précédentes **caractérisé en ce que** le rapport molaire M1 / alcoxyamine est compris entre 20 et 10000 et de préférence entre 50 et 100.

11. Procédé selon l'une quelconque des revendications précédentes **caractérisé en ce que** le mélange de monomères B2 comprend au moins un monomère choisi parmi les monomères présentant une double liaison carbone-carbone susceptible de polymériser par voie radicalaire, tels que les monomères vinyliques, vinylidéniques, diéniques et oléfiniques,

12. Procédé selon l'une quelconque des revendications précédentes **caractérisé en ce que** les solvants S1 ou S2 identiques ou différents peuvent être choisis parmi l'eau, un éther cyclique ou linéaire, un alcool, une cétone, un ester aliphatique, l'acide acétique, l'acide propionique, l'acide butyrique, un solvant aromatique tel que le benzène, le toluène, les xylènes, l'éthyl benzène, un solvant halogéné tel que le dichloroiméthane, le chloroforme, le dichloro ethane, un alcane tel que le pentane, le n hexane, le cyclo hexane, l'heptane, l'octane, le nonane ou le dodécane, un amide tel que le diméthyl formamide (DMF), le diméthyl sulfoxyde ou tout mélange des précédents solvants.

13. Procédé selon l'une quelconque des revendications précédentes **caractérisé en ce que** la matrice polymère P1 est choisie parmi le polyacrylate d'alkyle, le polystyrène, le polychlorure de vinyle (PVC), le polychlorure de vinyle sur-chloré (PVCC), le polyfluorure de vinylidène (PVDF), le polyméthacrylate de méthyle (PMMA), les polycarbonates, les polyamides, les polyesters insaturés, les polylactones, les polyépoxydes, les polyimines, les polyphosphazènes, les polyoléfines, les polybutadiènes, le polyacétate de vinyle, l'alcool polyvinylique, les polycétones, les polyuréthanes, ou tout copolymère des polymères cités.

14. Matériau composite obtenu suivant le procédé selon l'une quelconque des revendications précédentes **caractérisé en ce qu'**il comprend un copolymère à blocs ayant au moins un bloc 1 portant des fonctions ioniques ou ionisables issu de la polymérisation d'au moins un monomère M1 et un bloc 2 issu de la polymérisation d'un mélange de monomères B2, compatible avec la matrice polymère P1 si le bloc 1 ne l'est pas, ce copolymère étant un compatibilisant NTC / matrice polymère.

15. Utilisation du composite selon la revendication 14 comme matériau thermoréglable, dans des formulations de peintures aqueuses ou en solvant, dans des revêtements, en tant qu'additif ou matériau antistatique, pour le renforcement de propriétés mécaniques des thermodurs ou des thermoplastiques.
